# EUROPÄISCHE PATENTSCHRIFT

(11) **EP 4 263 309 B1**
(45) Veröffentlichungstag und Bekanntmachung des Hinweises auf die Patenterteilung: **31.12.2025**
(21) Anmeldenummer: 21823500.0
(22) Anmeldetag: 29.11.2021
(51) Int. Cl.: B60W 40/13, B60W 50/14

(54) **VERFAHREN UND VORRICHTUNG ZUM SICHEREN ABSTELLEN EINES FAHRZEUGS**
METHOD AND DEVICE FOR SAFELY PARKING A VEHICLE
DISPOSITIF ET PROCÉDÉ POUR GARER SANS DANGER UN VÉHICULE

(30) Priorität: 21.12.2020 DE 102020134426
(43) Veröffentlichungstag der Anmeldung: 25.10.2023
(73) Patentinhaber: MAN Truck & Bus SE, 80995 München (DE)
(72) Erfinder: ADAMCZYK, Gregor, 80995 München (DE)
(74) Vertreter: v. Bezold & Partner Patentanwälte - PartG mbB
(86) Internationale Anmeldenummer: PCT/EP2021/083304
(87) Internationale Veröffentlichungsnummer: WO 2022/135835

(56) Entgegenhaltungen:
- DE-A1- 102018 210 295
- KR-B1- 101 729 260
- US-A1- 2020 117 899
- US-A1- 2020 317 212

## Beschreibung

Die Erfindung betrifft ein Verfahren zum sicheren Abstellen eines Fahrzeugs sowie eine entsprechende Warnvorrichtung zur Durchführung dieses Verfahrens. Ferner betrifft die Erfindung ein Fahrzeug mit einer ebensolchen Warnvorrichtung.

Zum allgemeinen Stand der Technik wird auf die US 2020/117899 A1 verwiesen. Diese offenbart eine Vorrichtung, umfassend eine Sensorschnittstelle zum Empfangen von Lastdaten, die einem Fahrzeug zugeordnet sind, und zum Empfangen von Live-Videodaten von einer Kamera, wobei die Live-Videodaten eine Position eines Objekts in dem Fahrzeug enthalten, einen Last-Kartierer zum Erzeugen einer Karte von Lasten auf dem Fahrzeug auf der Grundlage der Lastdaten, einen Objekt-Gewicht-Korrelator zum Korrelieren einer Last der Karte von Lasten mit dem Objekt und einen Generator für erweiterte Realität zum Erzeugen einer erweiterten Umgebung, die die Position des Objekts und die mit dem Objekt korrelierte Last identifiziert.

Durch eine steigende Anzahl von Kraftfahrzeugen und die begrenzte Zahl an Rastplätzen bzw. bewirtschafteten Parkmöglichkeiten sind insbesondere Fahrer von Nutzfahrzeugen zum Einhalten ihrer vorgeschriebenen Lenkzeiten immer öfter gezwungen, auch auf weniger geeignete Parkflächen auszuweichen. Dabei stellt vor allem das Parken in abschüssigen Bereichen mit Gefälle den Fahrzeugführer meist vor Herausforderungen bei der richtigen Auswahl einer geeigneten Parkposition. Insbesondere bei wenig erfahrenen bzw. wenig qualifizierten Fahrern, die mit den Besonderheiten und Gefahren von Nutzfahrzeugen mitunter unzureichend vertraut sind, besteht somit ein Risiko, dass diese das Fahrzeug in einer möglicherweise gefährlichen Parkposition abstellen, in der - ohne weitere Sicherheitsvorkehrungen - ein unkontrolliertes Wegrollen bzw. Abgleiten des Fahrzeugs erfolgen kann.

Zum Schutz des Fahrers sowie anderer Personen besteht somit ein Bedarf an einer Lösung, mit der derartige Gefahrensituationen zuverlässig vermieden werden können. Insbesondere besteht dabei ein Bedarf an einer Lösung, mittels derer entsprechende Situationen vom Fahrzeug selbstständig erkannt werden können und mittels derer der Fahrer dann proaktiv auf die Gefahr aufmerksam gemacht werden kann.

Entsprechend ist es Aufgabe der Erfindung, eine Lösung für dieses Erfordernis bereitzustellen. Insbesondere ist es dabei Aufgabe der Erfindung, eine einfache Lösung bereitzustellen, mittels der ein sicheres Abstellen eines Fahrzeugs an einem Gefälle realisiert werden kann und die zudem möglichst wenig Modifikationen am Fahrzeug selbst erfordert.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung ist hierbei, bei (Nutz-)Fahrzeugen üblicherweise vorhandene Achslastsensoren zur Erkennung von kritischen Parkpositionen an Hängen zu nutzen, um dadurch - ohne dass zusätzliche Sensoren angebracht werden müssen - eine Zusatzfunktion für den Fahrer bereitzustellen, welche diesen vor ungeeigneten bzw. gefährlichen Abstellplätzen warnt. Das Erkennen kritischer Parkpositionen basiert hierbei darauf, dass sich - wie im Zusammenhang mit Figur 4 noch eingehender verdeutlicht werden wird - die auf die einzelnen Fahrzeugachsen wirkenden Achslasten in Abhängigkeit von der Schräglage des Fahrzeugs verändern, da der Fahrzeugschwerpunkt in der Regel versetzt zu den Fahrzeugachsen angeordnet ist.

Nach einem ersten unabhängigen Lösungsgedanken wird hierzu ein Verfahren zum sicheren Abstellen eines Fahrzeugs (z. B. einer Sattelzugmaschine) bereitgestellt. Vorzugsweise handelt es sich bei dem Verfahren um ein Verfahren zum sicheren Abstellen eines Fahrzeugs an einem Gefälle. Dabei soll das Fahrzeug zumindest zwei Fahrzeugachsen umfassen, an welchen jeweils wenigstens ein Achslastsensor angeordnet ist. Unter dem Ausdruck "Fahrzeugachse" soll gemäß der Definition in B. Heißing (Hrsg.) et al., Fahrwerkshandbuch (DOI 10.1007/978-3-8348-8168-7), Kapitel 4, die gesamte Verbindung zweier Räder und Radaufhängung für Einzelräder samt ihrer Anbindung an das Fahrgestell bzw. den Fahrgestellrahmen verstanden werden. Ein üblicher PKW hat somit nach der vorherigen Definition in der Regel zwei Achsen.

Das Verfahren umfasst dabei den Schritt eines Erfassens der an den zumindest zwei Fahrzeugachsen auftretenden Achslasten mithilfe der Achslastsensoren. Gemäß dem üblichen Verständnis soll hierbei unter dem Ausdruck "Achslast" die - zumeist in Kilogramm oder Tonnen angegebene - Gesamtlast verstanden werden, die von den Rädern einer Achse auf die Fahrbahn übertragen wird. Messtechnisch kann das vorgenannte "Erfassens der Achslasten" auch ein zur tatsächlichen "Achslast" proportionales Signal und/oder ein, z. B. elektrisches, Signal, aus dem die Achslast abgeleitet werden kann, umfassen.

Weiterhin umfasst das Verfahren den Schritt eines Ermittelns eines Achslastanteils für zumindest eine der Fahrzeugachsen auf Basis der erfassten Achslasten bzw. auf Basis der erfassten Signale. Als "Achslastanteil" kann hierbei das Verhältnis der Achslast an der zumindest einen Fahrzeugachse zur Summe aller erfassten Achslasten verstanden werden. Im lediglich beispielhaften Fall eines Fahrzeugs mit einer Vorderachse und einer Hinterachse kann somit z. B. der Achslastanteil der Hinterachse über die Formel G_{H}/(G_{V}+G_{H}) ausgedrückt werden, wobei G_{V} die Achslast der Vorderachse und G_{H} die Achslast der Hinterachse beschreibt.

Letztlich umfasst das Verfahren den Schritt eines Ausgebens einer Warnung, falls der ermittelte Achslastanteil einen vorbestimmten, d. h. zuvor festgelegten, Grenzwert unterschreitet. Mit anderen Worten kann eine Warnung ausgegeben werden, falls der ermittelte Achslastanteil kleiner als ein vorbestimmter Grenzwert ist. Hierzu kann das Verfahren ein Vergleichen des ermittelten Achslastanteils mit dem vorbestimmten Grenzwert umfassen, wobei vorzugsweise der Grenzwert derart festgelegt ist, dass bei einem Achslastanteil oberhalb dieses Grenzwerts eine ausreichende Bremswirkung an der Achse erzielt werden kann, ohne dass das Fahrzeug wegrollt bzw. wegrutscht. Auf vorteilhafte Weise kann somit - z. B. auf Basis des zumeist bereits im (Nutz-)Fahrzeug vorhandenen Wiegesystems ("on-board weighing system") - ein Warnen des Fahrers vor möglicherweise kritischen Parkpositionen, insbesondere an Gefällen, realisiert werden.

Nach einem ersten Aspekt der Erfindung kann die vorgenannte Warnung angeben, dass kein sicheres Abstellen des Fahrzeugs möglich ist. Zudem oder alternativ kann die Warnung auch angeben, dass eine andere Abstellposition eingenommen werden sollte und/oder das Fahrzeug zusätzlich, z. B. mittels Unterlegkeilen, abgesichert werden sollte. Die Warnung kann dabei eine optische und/oder akustische und/oder taktile Warnung sein. Lediglich beispielhaft kann in diesem Zusammenhang z. B. ein Warnsymbol bzw. eine Kontrollleuchte auf einem Instrumentenblock des Fahrzeugs aufleuchten und/oder ein Warnton ausgegeben werden, falls der ermittelte Achslastanteil den vorbestimmten Grenzwert unterschreitet.

Gemäß einem weiteren Aspekt der Erfindung kann das Verfahren nur bei oder, vorzugsweise unmittelbar, nach dem Abstellen eines Fahrzeugs durchgeführt werden. Mit anderen Worten soll das Verfahren nur durchgeführt werden, falls gerade ein Parken des Fahrzeugs erfolgt oder, vorzugsweise unmittelbar, erfolgte. Auf vorteilhafte Weise können dadurch unerwünschte Fehlwarnungen, z. B. bei einem kurzzeitig Durchfahren eines steilen Streckenabschnitts und/oder bei kurzzeitigen dynamischen Achslastveränderungen (z. B. durch Wanken) während der Fahrt, effizient vermieden werden.

Um hierbei auf vorteilhafte Weise ein entsprechendes Abstellen bzw. Parken des Fahrzeugs möglichst effektiv zu erkennen, kann das Verfahren ferner ein Erfassen wenigstens eines Signals, das ein Abstellen des Fahrzeugs anzeigt, umfassen. Lediglich beispielhaft kann das wenigstens eine Signal bei einem Abstellen des Motors, bei einem Abziehen des Zündschlüssels, bei einem Einlegen der Feststellbremse, bei einem Öffnen der Fahrertür und/oder bei einer leeren Fahrersitzbelegung abgegeben werden. Hierzu kann das Fahrzeug entsprechende Signal- und/oder Sensoreinrichtungen zum Erzeugen der vorgenannten Signale umfassen. In der Regel sind derartige Einrichtungen jedoch bereits standardmäßig im Fahrzeug verbaut und werden z. B. im Zusammenhang mit weiteren Hilf- bzw. Assistenzsystemen, wie z. B. einem Warntongeber "Licht an" beim Abstellen des Fahrzeugs, verwendet. Entsprechend können diese Instrumente oftmals auf vorteilhafte Weise ohne großen Umrüstaufwand im Rahmen des erfindungsgemäßen Verfahrens mitverwendet werden. In Abhängigkeit von dem erfassten wenigstens einen Signal können sodann die weiteren Schritte des Verfahrens durchgeführt werden. Vorzugsweise werden die weiteren Schritte (Erfassen der Achslasten, Ermitteln des Achslastanteils und Ausgeben der Warnung) hierbei nur dann durchgeführt, falls das erfasste wenigstens eine Signal anzeigt, dass ein Abstellen des Fahrzeugs erfolgt bzw. erfolgt ist.

Gemäß einem weiteren Aspekt der Erfindung kann der Achslastanteil das Verhältnis der Achslast an der zumindest einen Fahrzeugachse zur Summe der Achslasten an den zumindest zwei Fahrzeugachsen angeben. Mit anderen Worten kann der Achslastanteil das Verhältnis der Achslast an der zumindest einen Fahrzeugachse zur Summe der erfassten Achslasten verstanden werden. Im beispielhaften Fall eines Fahrzeugs mit einer Vorderachse und einer Hinterachse kann somit z. B. der Achslastanteil der Hinterachse über die Formel G_{H}/(G_{V}+G_{H}) ausgedrückt werden, wobei G_{V} die Achslast der Vorderachse und G_{H} die Achslast der Hinterachse beschreibt. Erfinderseitig wurde festgestellt, dass sich diese Größe, welche z. B. auf Grundlage des zumeist im Fahrzeug vorhandenen "on-board weighing systems" einfach abgeleitet werden kann, auf vorteilhafte Weise besondere effektiv für eine Erkennung möglicherweise ungeeigneter bzw. gefährlicher Parkpositionen an Gefällen nutzen lässt.

Nach einem weiteren Aspekt der Erfindung kann der vorbestimmte Grenzwert ein vom Fahrzeugmodell abhängiger Grenzwert sein. Da sich verschiedene Fahrzeugmodelle in der Regel in der Auslegung bzw. der Fahrzeuggeometrie (Radstand, Achsformel etc.) unterscheiden, kann es vorteilhaft sein, für jedes Fahrzeugmodell einen entsprechenden Grenzwert festzusetzen. Entsprechend kann das Verfahren ein Festlegen des vorbestimmten Grenzwerts in Abhängigkeit von einem Fahrzeugmodell bzw. in Abhängigkeit vom Fahrzeugmodell des Fahrzeugs umfassen. Dies kann dabei z. B. über entsprechende Abstellversuche an Gefällen mit bekannter Steigung erfolgen.

Zudem oder alternativ kann der vorbestimmte Grenzwert ein von einem aktuellen Beladungszustand des Fahrzeugs unabhängiger Grenzwert sein. D. h., der vorbestimmte Grenzwert kann für ein vollbetanktes und mit einem Fahrer und dessen Gepäck beladenes Fahrzeug derselbe sein wie für ein leeres Fahrzeug mit annähernd leerem Tank. Auf vorteilhafte Weise kann so eine möglichst einfache Möglichkeit zur Erkennung von kritischen Parkpositionen an Gefällen bereitgestellt werden.

Gemäß einem weiteren Aspekt der Erfindung kann das Verfahren ein Festlegen des vorbestimmten Grenzwerts unter Berücksichtigung von Abstellversuchen an Gefällen mit bekannter Steigung umfassen. Beispielsweise kann das Fahrzeug dazu auf einem Teststand geparkt werden, dessen Steigung ausgehend von einer waagrechten Position schrittweise erhöht wird, bis das Fahrzeug zu rutschen beginnt, d. h. die Hangabtriebskraft die Bremswirkung des Fahrzeugs übersteigt. Auf Basis der bei dieser Grenzsteigung auftretenden Achslastanteile kann sodann, vorzugsweise unter Berücksichtigung gewisser Sicherheits- und/oder Toleranzzugaben, ein entsprechender Grenzwert für dieses Fahrzeug bzw. dieses Fahrzeugmodell festgelegt werden.

Nach einem weiteren Aspekt der Erfindung können die Abstellversuche bei einer möglichst geringen Beladung, vorzugsweise ohne Beladung, und/oder möglichst geringem Tankinhalt , vorzugsweise mit leerem Tank, des Fahrzeugs durchgeführt werden. D. h., mit anderen Worten kann der Grenzwert für ein möglichst leichtes Fahrzeug, d. h. ein Fahrzeug ohne Fahrer und mit nahezu leerem Tank, durchgeführt werden. Dies ist von Vorteil, da durch das zusätzliche Gewicht die Gewichtskraft und damit die Haftreibungskraft zunimmt, wodurch in der Regel das Risiko für ein Wegrollen bzw. Abgleiten des Fahrzeugs sinkt.

Nach einem weiteren Aspekt der Erfindung kann das Verfahren ein Festlegen des vorbestimmten Grenzwerts unter Berücksichtigung von Abstellversuchen auf unterschiedlichen Bodenbelägen umfassen. Vorzugsweise werden dabei auch verschiede Witterungsverhältnisse der Bodenbeläge (z. B. eine nasse Fahrbahn) und/oder verschiedene Beladungszustände des Fahrzeugs berücksichtigt.

Gemäß einem weiteren Aspekt der Erfindung kann die zumindest eine Fahrzeugachse, für die ein Ermitteln des Achslastanteils erfolgt, eine Feststellbremseinrichtung umfassen. Die Feststellbremseinrichtung, welche auch als Parkbremseinrichtung bezeichnet werden kann, kann dabei einen Federspeicherbremszylinder umfassen, wobei die Feststellbremseinrichtung durch Entlüften des Federspeicherbremszylinders eingelegt und durch Belüften des Federspeicherbremszylinders gelöst werden kann. Zudem oder alternativ kann die zumindest eine Fahrzeugachse, für die ein Ermitteln des Achslastanteils erfolgt, eine Hinterachse des Fahrzeugs sein.

Nach einem weiteren Aspekt der Erfindung kann der wenigstens eine Achslastsensor einen Dehnungsmessstreifen und/oder einen Wegsensor umfassen. Zudem oder alternativ können jedoch auch andere im Stand der Technik bekannte Methoden zur Achslastsensierung, wie z. B. piezorestriktive Quarz-Kraftaufnehmer, verwendet werden. Weiterhin können die zumindest zwei Fahrzeugachsen auch luftgefederte Fahrzeugachsen sein, wobei die Achslastsensierung sodann auch über, an Federbälgen der Luftfedern angeschlossene bzw. an diesen angeordnete, Drucksensoren erfolgen kann.

Ferner sei in diesem Zusammenhang erwähnt, dass für eine möglichst übersichtliche Darstellung der Erfindung die Beschreibung vorrangig auf ein Fahrzeug mit einzelnen Fahrzeugachsen abgestellt wurde. Wie für den Fachmann sofort ersichtlich ist, kann die Lehre jedoch auch ohne Weiteres auf Achsgruppen, wie Tandemachsen bzw. Doppelachsaggregate, übertragen werden, ohne den Bereich der Erfindung zu verlassen. Mit anderen Worten kann eine in diesem Dokument erwähnte "Fahrzeugachse" auch eine Achsgruppe, z. B. eine Doppelachse, sein.

Nach einem weiteren unabhängigen Lösungsgedanken wird eine Warnvorrichtung für ein Fahrzeug bereitgestellt, wobei die Warnvorrichtung ausgebildet ist, ein Verfahren wie in diesem Dokument beschrieben durchzuführen. Hierzu kann die Warnvorrichtung einen Prozessor sowie einen Speicher umfassen. Vorzugsweise enthält der Speicher hierzu Anweisungen, die durch den Prozessor ausführbar sind, wodurch die Warnvorrichtung insgesamt in der Lage ist, ein zuvor beschriebenes Verfahren durchzuführen. Weiterhin kann die Warnvorrichtung, z. B. über Signalleitungen, in Kommunikationsverbindung mit entsprechenden Achslastsensoren stehen und/oder die entsprechenden Achslastsensoren als Teil der Warnvorrichtung mitumfassen. Auf vorteilhafte Weise kann so eine Vorrichtung zum Warnen des Fahrers vor möglicherweise kritischen Parkpositionen, insbesondere an Gefällen, bereitgestellt werden.

Weiterhin betrifft die Erfindung ein Fahrzeug, aufweisend zumindest zwei Fahrzeugachsen, z. B. eine Vorder- und eine Hinterachse, an welchen jeweils wenigstens ein Achslastsensor angeordnet ist. Ferner umfasst das Fahrzeug eine Warnvorrichtung wie in diesem Dokument beschrieben. Auch hier kann die Warnvorrichtung mit den Achslastsensoren über entsprechende Signalleitungen verbunden sein.

Nach einem weiteren Aspekt der Erfindung kann das Fahrzeug ein Nutzfahrzeug sein. Mit anderen Worten kann es sich bei dem Fahrzeug um ein Fahrzeug handeln, das durch seine Bauart und Einrichtung zur Beförderung von Personen, zum Transport von Gütern oder zum Ziehen von Anhängerfahrzeugen ausgelegt ist. Lediglich beispielhaft kann es sich bei dem Fahrzeug um eine Sattelzugmaschine ohne einen angekoppelten Sattelauflieger handeln.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: ein schematisches Flussdiagramm eines Verfahrens zum sicheren Abstellen eines Fahrzeugs gemäß einer Ausführungsform der Erfindung;
- Figur 2: eine schematische Darstellung eines Fahrzeugs, aufweisend eine Warnvorrichtung gemäß einer Ausführungsform der Erfindung; und
- Figur 3: exemplarische Achslastverteilungen bei einem Fahrzeug mit zwei Fahrzeugachsen für verschiedene Neigungswinkel und verschiedene Beladungszustände.

Gleiche oder funktional äquivalente Elemente sind dabei in allen Figuren mit denselben Bezugszeichen bezeichnet und zum Teil nicht gesondert beschrieben.

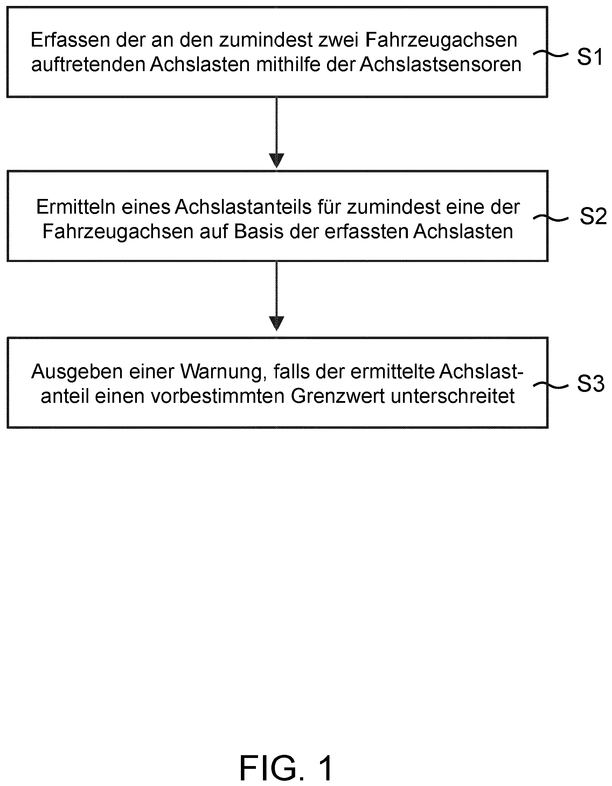

Figur 1 zeigt ein schematisches Flussdiagramm eines Verfahrens zum sicheren Abstellen eines Fahrzeugs 1 gemäß einer Ausführungsform der Erfindung. Das Fahrzeug 1 soll dabei zumindest zwei Fahrzeugachsen, z. B. eine Vorderachse 1a und eine Hinterachse 1b, umfassen, an welchen jeweils wenigstens ein Achslastsensor 3a, 3b angeordnet ist. In Schritt S1 erfolgt hierbei ein Erfassen der an den zumindest zwei Fahrzeugachsen 1a, 1b auftretenden Achslasten mithilfe der Achslastsensoren 3a, 3b. Im lediglich exemplarischen Fall von zwei Fahrzeugachsen - d. h. einer Vorderachse 1a und einer Hinterachse 1b - können in Schritt S1 somit die an der Vorderachse 1a auftretende Achslast G_{V} und die an der Hinterachse 1b auftretende Achslast G_{H} erfasst werden.

In Schritt S2 erfolgt sodann ein Ermitteln eines Achslastanteils für zumindest eine der Fahrzeugachsen auf Basis der erfassten Achslasten. Im vorstehend erwähnten Beispiel kann in-Schritt S2 z. B. ein Ermitteln des Achslastanteils der Hinterachse 1b gemäß der Formel G_{H}/(G_{V}+G_{H}) erfolgen. Zudem oder alternativ könnte jedoch auch ein Ermitteln des Achslastanteils der Vorderachse 1a gemäß der Formel G_{V}/(G_{V}+G_{H}) erfolgen. Vorzugsweise wird in Schritt S2 der Achslastanteil für eine Fahrzeugachse ermittelt, welche eine Feststellbremseinrichtung umfasst, was in der Regel die Hinterachse 1b ist.

In Schritt S3 erfolgt sodann ein Ausgeben einer Warnung, falls der ermittelte Achslastanteil einen vorbestimmten, d. h. zuvor festgelegten, Grenzwert unterschreitet. Mit anderen Worten kann das Verfahren ein Vergleichen des ermittelten Achslastanteils mit einem vorbestimmten Grenzwert umfassen, wobei eine Warnung ausgegeben werden kann, falls der ermittelte Achslastanteil kleiner als der vorbestimmte Grenzwert ist, und vorzugsweise keine Warnung ausgegeben wird, falls der ermittelte Achslastanteil gleich oder größer als der vorbestimmte Grenzwert ist.

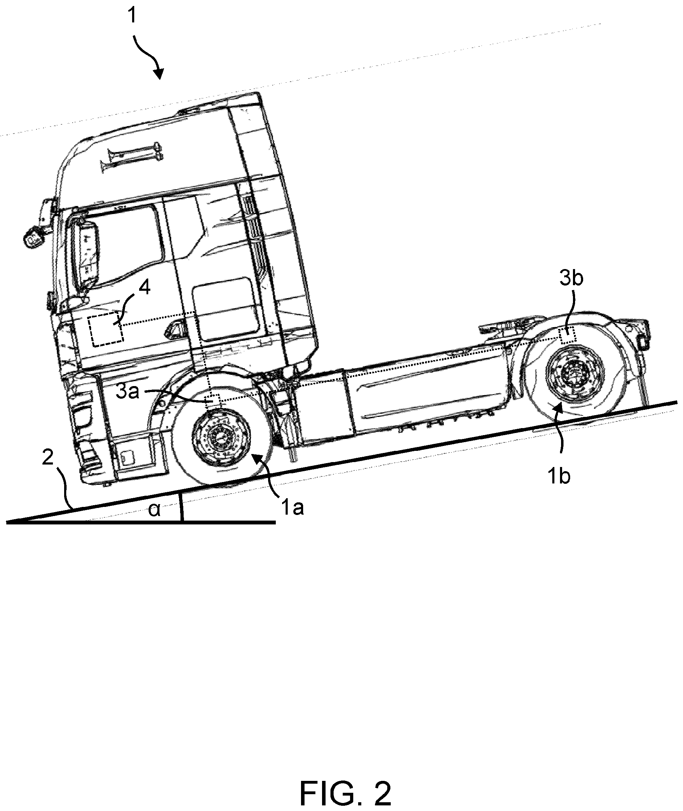

Figur 2 zeigt eine schematische Darstellung eines Fahrzeugs 1, aufweisend eine Warnvorrichtung 4 gemäß einer Ausführungsform der Erfindung. Bei dem Fahrzeug 1 handelt es sich vorliegend - lediglich beispielhaft - um eine Sattelzugmaschine ohne entsprechenden Auflieger. Die Sattelzugmaschine befindet sich hierbei auf einem Gefälle 2, welches um einen Winkel α gegenüber der Horizontalen geneigt ist, d. h. entgegen der Fahrtrichtung des Fahrzeugzugs 1 mit einer Steigung S = tan(α) ansteigt.

Weiterhin umfasst das Fahrzeug 1 zumindest zwei Fahrzeugachsen, vorliegend eine Vorderachse 1a und eine Hinterachse 1b, an welchen jeweils wenigstens ein Achslastsensor 3a, 3b angeordnet ist. Im vorliegenden Beispiel ist dabei der Achslastsensor 3a an der Vorderachse 1a und der Achslastsensor 3b an der Hinterachse 1b angeordnet, wobei die jeweiligen Fahrzeugachsen 1a und 1b zusätzlich auch noch weitere Achslastsensoren, beispielsweise zur Detektion lateraler Achslastverteilungen, umfassen können.

Erfindungsgemäß umfasst das Fahrzeug 1 ferner eine Warnvorrichtung 4, die ausgebildet ist, ein Verfahren wie in diesem Dokument beschrieben durchzuführen. Dazu kann die Warnvorrichtung 4 dazu über entsprechende, in Figur 2 gestrichelt dargestellte, Signalleitungen in Kommunikationsverbindung mit den vorgenannten Achslastsensoren 3a und 3b stehen, um hierüber die von den Achslastsensoren 3a und 3b erfassten Achslasten zu empfangen. Auf Basis dieser Achslasten kann die Warnvorrichtung 4 sodann einen Achslastanteil für zumindest eine der Fahrzeugachsen, z. B. die Hinterachse 1b, ermitteln und eine Warnung ausgeben, falls der ermittelte Achslastanteil einen vorbestimmten Grenzwert unterschreitet, wobei vorzugsweise der Grenzwert derart festgelegt ist, dass bei einem Achslastanteil oberhalb dieses Grenzwerts beim Parken des Fahrzeugs 1 eine ausreichende Bremswirkung an der entsprechenden Fahrzeugachse erzielt werden kann, ohne dass das Fahrzeug 1 wegrollt bzw. wegrutscht.

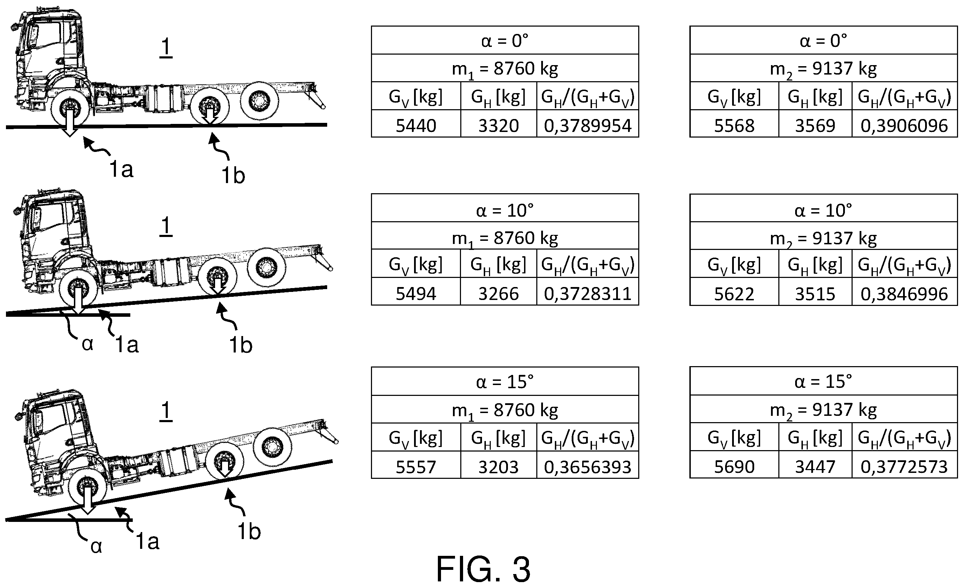

Figur 3 zeigt exemplarische Achslastverteilungen bei einem Fahrzeug 1 mit zwei Fahrzeugachsen - einer Vorderachse 1a und einer Hinterachse 1b-für verschiedene Neigungswinkel α und verschiedene Beladungszustände (m₁ und m₂). Bei dem Fahrzeug 1 handelt es sich vorliegend wiederum um ein - bereits im Zusammenhang mit Figur 2 diskutiertes - Sattelzugfahrzeug ohne Auflieger, weshalb hier auf ein detailliertes Referenzieren aller entsprechenden Fahrzeugkomponenten verzichtet wurde.

Im oben dargestellten Fall befindet sich das Fahrzeug 1 auf einer ebenen Fahrbahn, die keinerlei Gefälle bzw. Steigung (S=0) aufweist. Demgegenüber zeigt der mittlere Fall eine Situation, in der sich das Fahrzeug 1 auf einem Gefälle 2 befindet, welches um α = 10° gegenüber der Horizontalen geneigt ist, d. h. in Fahrtrichtung des Fahrzeugzugs 1 mit einer Steigung S von etwa 18 % abfällt. Im unteren Fall befindet sich die Sattelzugmaschine auf einer noch stärker geneigten Fahrbahn, welche um α = 15° gegenüber der Horizontalen geneigt ist, d. h. in Fahrtrichtung des Fahrzeugzugs 1 mit einer Steigung S von etwa 27 % abfällt.

Die in den entsprechenden Tabellen angegebenen Werte stellen dabei exemplarische Achslastverteilungen in den verschiedenen Neigungssituationen dar, wobei die linke Spalte den Fall eines möglichst leeren Fahrzeugs 1 (ohne Fahrer und ohne Tankfüllung) mit einem Gesamtgewicht von 8760 kg und die rechte Spalte den Fall eines Fahrzeugs 1 mit einem Fahrer (75 kg) und vollem Tank und einem entsprechenden Gesamtgewicht von 9137 kg betrifft.

Wie dem waagerechten Fall (oben) zu entnehmen ist, ist die Achslast vorliegend aufgrund der bauartbedingten Komponentenverteilung frontlastig, d. h., der Schwerpunkt liegt näher an der Vorderachse 1a als an der Hinterachse 1b, sodass sich an der Vorderachse 1a eine größere Achslast G_{V} als an der Hinterachse 1b (G_{H} < G_{V}) ergibt. Mit zunehmender Steigung (Mitte und unten) wandert die Wirkrichtung der Schwerpunktlage, wodurch die Vorderachse 1a mehr belastet wird und die Hinterachse 1b mehr entlastet wird, was sich sodann auch im Achslastanteil der Hinterachse 1b, d. h. im Wert G_{H}/(G_{V}+G_{H}), widerspiegelt. Dieser sinkt - beim leeren Fahrzeug 1 - ausgehend von einem Wert von 0,3789954 im waagerechten Fall auf 0,3656393 bei einem Neigungswinkel von 15°. Auch beim beladenen Fahrzeug 1 lässt sich diese Entwicklung ebenfalls beobachten, wobei sich bedingt durch die insgesamt größeren Achslasten G_{V}, G_{H} etwas größere Achslastanteile ergeben.

Ab einem gewissen Neigungswinkel α_{grenz} würde - im Fall einer zumeist an der Hinterachse 1b angebrachten Feststellbremse - die Haftreibung der Hinterachse 1b nicht mehr ausreichen, um das Fahrzeug 1 am Gefälle 2 zu halten, sodass dann ohne weitere Sicherungsmaßnahmen ein unkontrolliertes Wegrollen bzw. Abgleiten des Fahrzeugs 1 droht. Hier setzt nun die erfindungsgemäße Lösung an, die den Fahrer vor derartigen kritischen Situationen warnt, indem eine Warnung ausgegeben wird, falls der Achslastanteil (hier der Hinterachse 1b) einen vorbestimmten Grenzwert unterschreitet. Wie durch die beiden exemplarischen Fälle mit m₁ und m₂ verdeutlicht wird, ist dabei die Gefahr im Falle eines leichten, d. h. wenig beladenen, Fahrzeugs 1 größer, da hier weniger Gewicht auf den Achsen lastet, sodass der Grenzwert bevorzugt derart festgelegt ist, dass auch bei einem möglichsten leichten Fahrzeug immer noch eine ausreichende Bremswirkung an der Achse erzielt werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der durch die beigefügten Patentansprüche definierten Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeug
- 1a, 1b: Fahrzeugachse
- 2: Gefälle
- 3a, 3b: Achslastsensor
- 4: Warnvorrichtung

## Patentansprüche

1. Verfahren zum sicheren Abstellen eines Fahrzeugs (1), vorzugsweise zum sicheren Abstellen eines Fahrzeugs (1) an einem Gefälle (2), wobei das Fahrzeug (1) zumindest zwei Fahrzeugachsen (1a, 1b) umfasst, an welchen jeweils wenigstens ein Achslastsensor (3a, 3b) angeordnet ist, aufweisend die Schritte:
- Erfassen der an den zumindest zwei Fahrzeugachsen (1a, 1b) auftretenden Achslasten mithilfe der Achslastsensoren (3a, 3b);
- Ermitteln eines Achslastanteils für zumindest eine der Fahrzeugachsen (1a, 1b) auf Basis der erfassten Achslasten; und
- Ausgeben einer Warnung, falls der ermittelte Achslastanteil einen vorbestimmten Grenzwert unterschreitet.

2. Verfahren nach Anspruch 1, **dadurch gekennzeichnet, dass** die Warnung angibt, dass kein sicheres Abstellen des Fahrzeugs (1) möglich ist und/oder eine andere Abstellposition eingenommen werden sollte und/oder das Fahrzeug (1) zusätzlich abgesichert werden sollte.

3. Verfahren nach einem der vorherigen Ansprüche, **dadurch gekennzeichnet, dass** das Verfahren nur bei oder, vorzugsweise unmittelbar, nach dem Abstellen des Fahrzeugs (1) durchgeführt wird.

4. Verfahren nach Anspruch 3, **gekennzeichnet durch** ein Erfassen wenigstens eines Signals, das ein Abstellen des Fahrzeugs (1) anzeigt, z. B. eines Signals, das beim Abstellen des Motors und/oder beim Abziehen des Zündschlüssels abgegeben wird, wobei die weiteren Schritte des Verfahrens in Abhängigkeit vom erfassten wenigstens einen Signal durchgeführt werden.

5. Verfahren nach einem der vorherigen Ansprüche, **dadurch gekennzeichnet, dass** der Achslastanteil das Verhältnis der Achslast an der zumindest einen Fahrzeugachse (1b) zur Summe der Achslasten an den zumindest zwei Fahrzeugachsen (1a, 1b) angibt.

6. Verfahren nach einem der vorherigen Ansprüche, **dadurch gekennzeichnet, dass** der vorbestimmte Grenzwert
a) ein vom Fahrzeugmodell abhängiger Grenzwert ist; und/oder
b) ein von einem aktuellen Beladungszustand des Fahrzeugs (1) unabhängiger Grenzwert ist.

7. Verfahren nach einem der vorherigen Ansprüche, **dadurch gekennzeichnet, dass** der wenigstens eine Achslastsensor (3a, 3b) einen Dehnungsmessstreifen und/oder einen Wegsensor umfasst.

8. Verfahren nach einem der vorherigen Ansprüche, **dadurch gekennzeichnet, dass** die zumindest eine Fahrzeugachse (1b), für die ein Ermitteln des Achslastanteils erfolgt,
a) eine Feststellbremseinrichtung umfasst; und/oder
b) eine Hinterachse (1b) des Fahrzeugs (1) ist.

9. Verfahren nach einem der vorherigen Ansprüche, **gekennzeichnet durch** ein Festlegen des vorbestimmten Grenzwerts unter Berücksichtigung von Abstellversuchen an Gefällen (2) mit bekannter Steigung.

10. Verfahren nach Anspruch 9, **dadurch gekennzeichnet, dass** die Abstellversuche bei einer möglichst geringen Beladung, vorzugsweise ohne Beladung, und/oder möglichst geringem Tankinhalt, vorzugsweise mit leerem Tank, des Fahrzeugs durchgeführt werden.

11. Warnvorrichtung (4) für ein Fahrzeug (1), wobei die Warnvorrichtung (4) ausgebildet ist, ein Verfahren nach einem der vorherigen Ansprüche 1 bis 8 durchzuführen.

12. Fahrzeug (1) aufweisend zumindest zwei Fahrzeugachsen (1a, 1b), an welchen jeweils wenigstens ein Achslastsensor (3a, 3b) angeordnet ist, und eine Warnvorrichtung (4) nach Anspruch 11.

13. Fahrzeug (1) nach Anspruch 12, **dadurch gekennzeichnet, dass** das Fahrzeug (1) ein Nutzfahrzeug, vorzugsweise eine Sattelzugmaschine, ist.

## Claims

1. Method for safely parking a vehicle (1), preferably for safely parking a vehicle (1) on a slope (2), the vehicle (1) comprising at least two vehicle axles (1a, 1b), on each of which at least one axle load sensor (3a, 3b) is arranged, the method comprising the steps:
- Detecting of the axle loads occurring on the at least two vehicle axles (1a, 1b) with the aid of the axle load sensors (3a, 3b);
- determining an axle load ratio for at least one of the vehicle axles (1a, 1b) based on the detected axle loads; and
- outputting a warning if the determined axle load ratio is below a predetermined limit value.

2. Method according to claim 1, **characterized in that** the warning indicates that safe parking of the vehicle (1) is not possible and/or another parking position should be taken and/or the vehicle (1) should be additionally secured.

3. Method according to one of the previous claims, **characterized in that** the method is carried out only when or, preferably immediately, after the vehicle (1) is parked.

4. Method according to claim 3, **characterized by** detecting at least one signal indicating that the vehicle (1) has been parked, e.g. a signal which is outputted when the engine is switched off and/or when the ignition key is removed, and wherein the further steps of the method being carried out as a function of the detected at least one signal.

5. Method according to one of the previous claims, **characterized in that** the axle load ratio indicates the ratio of the axle load on the at least one vehicle axle (1b) to the sum of the axle loads on the at least two vehicle axles (1a, 1b).

6. A method according to any one of the preceding claims, **characterized in that** the predetermined limit value
a) is a limit value dependent on a vehicle model; and/or
b) is a limit value that is independent of a current loading condition of the vehicle (1).

7. A method according to any one of the preceding claims, **characterized in that** the at least one axle load sensor (3a, 3b) comprises a strain gauge and/or a displacement sensor.

8. Method according to one of the previous claims, **characterized in that** the at least one vehicle axle (1b) for which a determination of the axle load ratio takes place,
a) comprises a parking brake device; and/or
b) is a rear axle (1b) of the vehicle (1).

9. Method according to one of the preceding claims, **characterized by** determining of the predetermined limit value taking into account parking tests on slopes (2) with known gradient.

10. Method according to claim 9, **characterized in that** the parking tests are carried out with the lowest possible load, preferably no load, and/or the lowest possible tank content, preferably with an empty tank, of the vehicle.

11. A warning device (4) for a vehicle (1), wherein the warning device (4) is configured to perform a method according to any of the preceding claims 1 to 8.

12. Vehicle (1) comprising at least two vehicle axles (1a, 1b), on each of which at least one axle load sensor (3a, 3b) is arranged, and a warning device (4) according to claim 11.

13. Vehicle (1) according to claim 12, **characterized in that** the vehicle (1) is a commercial vehicle, preferably a semitrailer truck.

## Revendications

1. Procédé pour stationner un véhicule (1) en toute sécurité, de préférence pour stationner un véhicule (1) en toute sécurité sur une pente (2), le véhicule (1) comprenant au moins deux essieux (1a, 1b) de véhicule sur chacun desquels est agencé au moins un capteur de charge par essieu (3a, 3b), comprenant les étapes suivantes :
- détection des charges par essieu s'exerçant sur lesdits au moins deux essieux (1a, 1b) de véhicule au moyen des capteurs de charge par essieu (3a, 3b) ;
- détermination d'une proportion de charge par essieu pour au moins un des essieux (1a, 1b) de véhicule à partir des charges par essieu détectées ; et
- émission d'un avertissement si la proportion de charge par essieu déterminée descend en dessous d'une valeur limite prédéfinie.

2. Procédé selon la revendication 1, **caractérisé en ce que** l'avertissement indique qu'il n'est pas possible de stationner le véhicule (1) en toute sécurité et/ou qu'une autre position de stationnement doit être choisie et/ou que le véhicule (1) doit être sécurisé de manière supplémentaire.

3. Procédé selon l'une des revendications précédentes, **caractérisé en ce que** le procédé n'est mis en œuvre qu'au moment où le véhicule (1) est garé ou, de préférence, immédiatement après.

4. Procédé selon la revendication 3, **caractérisé par** une détection d'au moins un signal indiquant un arrêt du véhicule (1), par exemple un signal émis lors de l'arrêt du moteur et/ou du retrait de la clé de contact, les étapes suivantes du procédé étant mise en œuvre en fonction dudit au moins un signal détecté.

5. Procédé selon l'une des revendications précédentes, **caractérisé en ce que** la proportion de charge par essieu indique le rapport entre la charge par essieu sur ledit au moins un essieu (1b) du véhicule et la somme des charges par essieu sur lesdits au moins deux essieux (1a, 1b) du véhicule.

6. Procédé selon l'une des revendications précédentes, **caractérisé en ce que** la valeur limite prédéterminée est
a) une valeur limite dépendant du modèle de véhicule ; et/ou
b) une valeur limite indépendante de l'état de chargement actuel du véhicule (1).

7. Procédé selon l'une des revendications précédentes, **caractérisé en ce que** ledit au moins un capteur de charge d'essieu (3a, 3b) comprend une jauge de contrainte et/ou un capteur de déplacement.

8. Procédé selon l'une des revendications précédentes, **caractérisé en ce que** ledit au moins un essieu de véhicule (1b) pour lequel une détermination de la proportion de charge d'essieu est effectuée
a) comprend un dispositif de freinage de stationnement ; et/ou
b) est un essieu arrière (1b) du véhicule (1).

9. Procédé selon l'une des revendications précédentes, **caractérisé par** une détermination de la valeur limite prédéfinie en tenant compte d'essais de stationnement sur des pentes (2) dont l'inclinaison est connue.

10. Procédé selon la revendication 9, **caractérisé en ce que** les essais de stationnement sont effectués avec une charge aussi faible que possible, de préférence à vide, et/ou avec le réservoir du véhicule aussi vide que possible, de préférence vide.

11. Dispositif d'avertissement (4) pour un véhicule (1), le dispositif d'avertissement (4) étant conçu pour mettre en œuvre un procédé selon l'une des revendications 1 à 8 précédentes.

12. Véhicule (1) comprenant au moins deux essieux (1a, 1b) de véhicule, sur chacun desquels est agencé au moins un capteur de charge par essieu (3a, 3b), et un dispositif d'avertissement (4) selon la revendication 11.

13. Véhicule (1) selon la revendication 12, **caractérisé en ce que** le véhicule (1) est un véhicule utilitaire, de préférence un tracteur routier.
